# EUROPÄISCHE PATENTSCHRIFT

(11) **EP 0 921 022 B1**
(45) Veröffentlichungstag und Bekanntmachung des Hinweises auf die Patenterteilung: **02.03.2005**
(21) Anmeldenummer: 98120327.6
(22) Anmeldetag: 27.10.1998
(51) Int. Cl.: B60H 1/32

(54) **Trocknerpatrone für Fahrzeugklimaanlage**
Dryer cartridge for a vehicle air conditioning unit
Cartouche de séchage pour un dispositif de conditionnement d'air pour véhicule

(30) Priorität: 05.12.1997 DE 29721546 U
(43) Veröffentlichungstag der Anmeldung: 09.06.1999
(73) Patentinhaber: Finber S.p.A, 43100 Scarzara (Parma) (IT)
(72) Erfinder: Bernini, Michele, 43100 Parma (IT); Edel, Jacques, 92100 Boulogne-Billancourt (FR)
(74) Vertreter: Grünecker, Kinkeldey, Stockmair & Schwanhäusser Anwaltssozietät

(56) Entgegenhaltungen:
- FR-A- 2 746 908
- US-A- 4 436 623

## Beschreibung

Die Erfindung betrifft eine Trocknerpatrone gemäß dem Oberbegriff des Anspruchs 1.

Aus DE-U-29 70 0640 ist es bekannt, die Trocknerpatrone in den Dichtsitz des Sammelkanals eines Kondensators einzustecken. In eine Ringnut ist ein O-Ring eingeknüpft, der von der Trocknerpatrone dichtend gegen die Innenwand des Dichtsitzes gepreßt ist. In der Abströmöffnung ist in einem Fußteil eine Scheibe eines Filtermaterials mit sehr kleiner Porengröße angeordnet. Alternativ könnte das Feinfiltermaterial als Kappe oder Stopfen auch am untenliegenden Ende des Fußteils angebracht sein. Der Dichtsitz benötigt zur Zusammenarbeit mit dem O-Ring eine sorgfältige Bearbeitung, die kostenintensiv und zeitaufwendig ist. Bei der Montage der Trocknerpatrone muß besondere Sorgfalt ausgeübt werden. Es kann im Betrieb durch fahrzeugbedingte Erschütterungen und thermische Einwirkungen dennoch zu Undichtigkeiten kommen, auch bedingt durch die Materialpaarung Metall/Kunststoff, in die der O-Ring integriert ist. Ferner können Fertigungstoleranzen die Abdichtung beinträchtigen. Da Automobilhersteller im Regelfall extrem kleinporiges Filtermaterial fordern, um auch feinste Verschmutzungpartikel aus der Kältemittel-Zirkulation absondern zu können, ergibt dies bei hoher Förderrate sehr hohen Durchströmwiderstand für das abströmende Kältemittel.

Aus EP-A-0 689 014 ist eine Trocknerpatrone bekannt, bei der zwischen den Einströmdurchbrüchen und den Abströmöffnungen außen in einem umlaufenden Wulst eine Ringnut eingeformt ist, die einen Viereck-Dichtring hält, der radial an der Innenwand eines Sammelrohres des Kondensators anliegt. Unter ungünstigen Betriebsbedingungen können Undichtigkeiten auftreten, so daß Verschmutzungspartikel ungehindert im Kältemittelkreislauf transportiert werden.

Eine aus DE-A-44 02 927 bekannte Trocknerpatrone besteht aus einem Oberteil und einem damit verrasteten Unterteil. Im Oberteil ist außen eine Ringnut geformt, die einen Dichtring mit annähernd rechteckigem Querschnitt hält, der axial gegen einen Sitz im Sammelrohr des Kondensators gedrückt und darauf mit axialer Vorspannung gehalten wird. Unter ungünstigen Betriebszuständen kann die Dichtwirkung des Dichtringes nachlassen, so daß Verschmutzungen ungehindert im Kältemittelkreislauf transportiert werden. Es ist zwar vorgeschlagen, anstelle eines Dichtringes mit rechteckigem Querschnitt und axialer Anlage einen Dichtring mit einer Lippe vorzusehen, die sich an die Innenwand des Sammelrohres anlegen soll, so daß auf einen Ringsitz mit axialer Dichtfläche für den Dichtring verzichtet werden kann. Die korrekte Zusammenarbeit zwischen einer Dichtlippe und der Innenwand des Sammelrohrs erfordert erheblichen Herstellungs- und Bearbeitungsaufwand, eine sorgfältige Montage, und ist nicht in der Lage, herstellungsbedingte Toleranzen zuverlässig zu kompensieren.

Weiterer Stand der Technik ist enthalten in der Zeitschrift ATZ, Automobiltechnische Zeitschrift, 97 (1995), Mai, Nr. 5, Stuttgart, DE, S. 304 bis 307, Verfasser: Roland Burk, "Kondensatormodul für Kraftfahrzeug-Klimaanlagen".

Der Erfindung liegt die Aufgabe zugrunde, eine Trocknerpatrone für eine Fahrzeug-Klimaanlage zu schaffen, bei der trotz verringerten Herstellungsaufwandes und vereinfachter Montage eine in allen Betriebszuständen zuverlässige Abdichtung gegeben ist, die nicht nur Herstellungstoleranzen sondern auch betriebsbedingte Einflüsse zu kompensieren vermag.

Die gestellte Aufgabe wird mit den Merkmalen des Anspruchs 1 gelöst.

Der auf der Trocknerpatrone angeordnete Dichtring umfaßt den Sitz manschettenartig, so daß über den Sitz keine Leckage auftritt. Die mindestens zwei elastischen Dichtlippen unterstützen einander zum Erzeugen einer einwandfreien Abdichtung, selbst wenn herstellungsbedingte Toleranzen und/oder betriebsbedingte Einflüsse zu kompensieren sind. Jede Dichtlippe kann für sich bereits eine einwandfreie Abdichtung erzeugen und sich an die örtlichen Gegebenheiten durch Verformen anpassen. Sollte eine Dichtlippe allein nicht ausreichen, kommt eine weitere zu Hilfe, auch deswegen, weil der Dichtring in einem axial relativ ausgedehnten Abdichtbereich wirkt. Es wird die Montage der Trocknerpatrone, unabhängig davon, ob sie in einen Kondensator, einen Trocknerbehälter oder einen Akkumulator eingebaut wird, vereinfacht, weil sich die Dichtlippen selbsttätig in die erforderliche Dichtstellung bringen und dabei weitgehend unempfindlich gegen bei der Montage und im Betrieb auftretende mechanische Einflüsse sind. Dazu kommt, daß der Dichtring kostengünstig herstellbar und einfach anbringbar ist.

Besonders zweckmäßig ist es, drei Dichtlippen vorzusehen. Ggfs. sind sogar mehr als drei Dichtlippen günstig.

Gemäß Anspruch 3 beansprucht der Dichtring wenig Einbauraum, wobei die Dichtlippen in radialer und axialer Richtung viel Verformungsspielraum haben und sich selbsttätig in optimale Dichtstellungen bringen.

Gemäß Anspruch 4 sind die Dichtlippen untereinander gleich hoch, zweckmäßigerweise höher als die radiale Stärke des Grundkörpers. Es ist aber auch denkbar, die Dichtlippen unterschiedlich hoch zu gestalten, d.h., die in Einsteckrichtung vordere Dichtlippe z.B. niedriger auszubilden als die in Einsteckrichtung hinterste Dichtlippe.

Gemäß Anspruch 5 sind die Dichtlippen in etwa gleich weit voneinander beabstandet. Sie lassen sich so gegenseitig einen relativ großen Verformungsraum.

Gemäß Anspruch 6 sind die Dichtlippen radial und axial relativ leicht verformbar und dadurch in der Lage, sich selbsttätig an die jeweils gegebenen Einbaubedingungen anzupassen.

Gemäß Anspruch 7 sollten die Kämme der Dichtlippen gerundet sein, um eindeutige Anlageverhältnisse für eine wirkungsvolle Abdichtung zu erreichen. Es wäre aber auch denkbar, die Dichtlippen schneidenartig auslaufen zu lassen, weil sie sich dann gegebenenfalls noch besser an die Einbaugegebenheiten anpassen können.

Gemäß Anspruch 8 ist speziell HNBR mit einer Shore-Härte um etwa 70 ein zweckmäßiges Material für die einstückige Herstellung des Dichtringes, weil dieses Material relativ temperatur- und druckunempfindlich und immun gegen das in Fahrzeug-Klimaanlagen verwendete Kältemittel ist.

Besonders zweckmäßig ist gemäß Anspruch 9 ein topfartiger Endteil vorgesehen, der die Möglichkeit schafft, abströmseitig einen großen Querschnitt zu bieten, damit das Filtermaterial (Porengröße 10 bis 200 µm) beim Zurückhalten auch feinster Partikel, die den Dichtring nicht umgehen können, den Durchflußwiderstand bei maximaler Förderrate nicht unzweckmäßig steigert.

Gemäß Anspruch 10 ist zweckmäßigerweise der Endteil sozusagen ein getrennter Formteil und am Grundkörper der Patrone nachträglich festgelegt. Dies hat wichtige Herstellungsvorteile und vereinfacht die Montage des Dichtringes, weil dieser bereits vor dem Aufstecken des Endteiles an diesem oder am Grundkörper anbringbar ist. Es lassen sich unterschiedlich dimensionierte Grundkörper und Formteile baukastenartig kombinieren, die nur im Verbindungsbereich zueinander passen müssen.

Herstellungs- und montagetechnisch günstig ist gemäß Anspruch 11 eine einfache Rastverbindung zwischen dem Endteil und dem Rohrabschnitt.

Gemäß Anspruch 12 sind zu- und abströmseitig sehr große Querschnitte vorhanden die sich auf große Längen verteilen. Diese Querschnitte werden vom Dichtring voneinander getrennt. Auch kleinporiges Filtermaterial hat nur vernachlässigbaren Einfluß auf den Durchströmwiderstand.

Gemäß Anspruch 13 ergibt sich bei einfacher Montage der Trocknerpatrone hohe Dichtigkeit. Die eingeschnürte Innenwand kann von einem entsprechend verformten Rohr gebildet werden, z.B. in einem Kondensator oder dem Gehäuse eines Trocknerbehälters.

Gemäß Anspruch 14 werden abgeschiedene Partikel im Kragen gesammelt, so daß sie bei einem Ausbau der Trocknerpatrone einfach mitentsorgt werden.

Gemäß Anspruch 15 gewährleistet der Sicherheitsfilter bei einem Bruch des feinporigen Filtermaterials, daß keine Anteile der Charge ausgespült werden. Außerdem kann der Sicherheitsfilter das schwächere Filtermaterial bei Verformung abstützen, so daß es zu keinem Bruch des feinporigen Filtermaterials kommt.

Gemäß Anspruch 16 ist aus herstellungstechnischen Gründen, und um den feinporigen Filtermaterial gegebenenfalls eine Atmungsbewegung zu gestatten, ein Zwischenabstand vorgesehen.

Anhand der Zeichnung werden Ausführungsformen des Erfindungsgegenstandes erläutert. Es zeigen:
- Fig. 1: in Seitenansicht, teilweise im Schnitt, eine Trocknerpatrone, beispielsweise in einem gestrichelt angedeuteten Kondensator, jedoch auch brauchbar für einen Trockner- oder Akkumulatorbehälter, einer Fahrzeug-Klimaanlage,
- Fig. 2A: vergrößert den unteren Endabschnitt der Trocknerpatrone von Fig. 1, teilweise im Schnitt,
- Fig. 2B: eine Detailvariante zu Fig. 2A,
- Fig. 3: eine weitere Ausführungsform einer Trocknerpatrone, von der in Explosionsdarstellung der untere Endbereich angedeutet ist,
- Fig. 4: einen Teilschnitt einer weiteren Ausführungsform, und
- Fig. 5: einen Schnitt einer weiteren Ausführungsform.

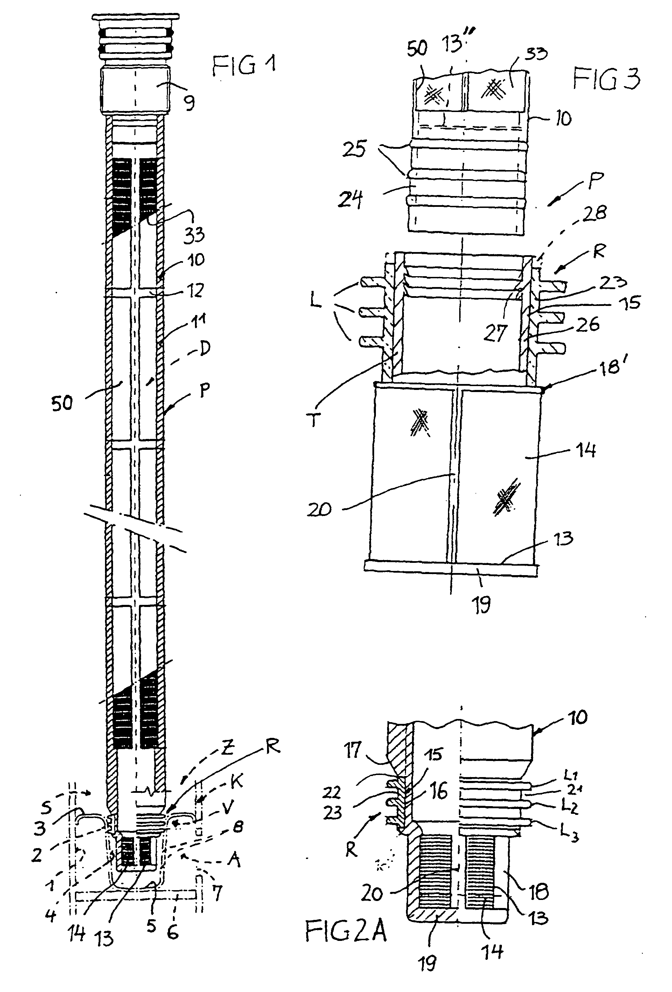

In Fig. 1 ist in einen annähernd rohrförmigen Sammelkanal S eines Kondensators K einer nicht gezeigten Fahrzeug-Klimaanlage eine Trocknerpatrone P eingesetzt, die zur Aufnahme und Positionierung einer vom Kältemittel durchströmten Exsiccator-Charge D bestimmt ist, um aus dem Kältemittel Wasser entziehen zu können. Die Trocknerpatrone P ist austauschbar und wird in ihrer Betriebslage gegebenenfalls durch nicht dargestellte Halteelemente festgelegt. Alternativ könnte die Trocknerpatrone P in einen Sitz eines Trocknerbehälters oder Akkumulators, beides nicht gezeigt, einer Fahrzeug-Klimaanlage austauschbar eingesetzt werden.

Im Sammelkanal S ist zwischen einer Zuströmseite Z und einer Abströmseite A bei einer Abströmöffnung 7 ein umgekehrt hutförmiger Einsatz V, beispielsweise aus Metall, eingesetzt, der zum Postionieren der Trocknerpatrone P dient und gleichzeitig eine Trennung zwischen der Zuström- und der Abströmseite herstellt, um das gesamte Kältemittel zum Durchströmen der Trocknerpatrone P zu zwingen. Der Einsatz V ist mit seiner Hutkrempe 3 an einer Innenwand 1 befestigt und liegt mit einem Boden 5 eines Hutnapfes 2 einer Bodenwand 6 benachbart. Der Hutnapf verjüngt sich in Einsteckrichtung der Trocknerpatrone P (in Fig.1 von oben nach unten). Im Hutnapf 2 sind angrenzend an den eigentlichen Sitzbereich Durchgangsöffnungen 8 vorgesehen. Der Einsatz V bildet einen Sitz.

Die Trocknerpatrone P ist mit einem Dichtring R mit z.B. drei Dichtlippen dichtend in den Sitz des Einsatzes V eingesteckt. Die Trocknerpatrone P hat einen als Kunststoff-Spritzgußteil aus PA 66 oder PAO ausgebildeten, käfigartigen Grundkörper 10 mit Längsstegen 11 und Querstegen 12, die fensterartige, großflächige Durchbrüche 50 begrenzen. Die Durchbrüche sind durch ein Filtermaterial 33 abgedeckt, beispielsweise ein Polyamidgewebe oder anderes Filtergewebe, oder ein Inox-Sieb, und zwar mit einer Porengröße zwischen 60 und 300 µm. Am oberen Ende des Grundkörpers 10 ist ein Stopfen 9 vorgesehen. Im unteren Endteil der Trocknerpatrone P jenseits des Dichtringes R sind fensterartige Durchbrüche 13 vorgesehen, die einen Abströmquerschnitt definieren und ebenfalls durch Filtermaterial 14 abgedeckt sind. Die Porengröße dieses Filtermaterials 14 könnte zwischen 10 und 200 µm betragen, zweckmäßigerweise zwischen 20 und 50 µm, um auch kleinste Partikel am Zirkulieren im Kältemittelkreislauf zu hindern, wird jedoch abhängig von den Anforderungen des Automobilherstellers gewählt.

In Fig. 2A ist der Dichtring R in einem am Grundkörper 10 geformten Sitz 15, beispielsweise einer umlaufenden Ringnut 16, zwischen axialen Endschultern der Ringnut 16 positioniert, gegebenenfalls mit axialer und/oder radialer Vorspannung. Angrenzend an den Sitz 15 verläuft eine kegelige Fläche 17 nach oben. Der hier einstückig mit dem Grundkörper 10 gebildete Endteil 18 der Trocknerpatrone P ist topfförmig und hat einen geschlossenen Boden 19 und fensterartige Durchbrüche 13, die durch das Filtermaterial 14 abgedeckt sind. Gegebenenfalls (Fig. 3) ist oberhalb des Endteils 18 eine Filterscheibe 13'' aus einem Filtermaterial, z.B. entsprechend dem Filtermaterial 33 vorgesehen, um das Herabfallen von Bestandteilen der Charge D in den Endteil 18 zu verhindern. Die Durchbrüche 13 im Endteil 18 sind von Axialstegen 20 begrenzt. Der Dichtring R besitzt drei zueinander annähernd parallel umlaufende Dichtlippen L1 bis L3, zwischen denen axiale Abstände 21 vorliegen und die einstückig an einem in etwa zylindrischen Grundkörper 23 geformt sind, derart, daß der Grundkörper 23 nach oben und nach unten geringfügig über die oberste bzw. unterste Dichtlippe L1 , L3 übersteht.

Der Dichtring R kann beispielsweise ein Spritzgußformteil sein oder ein abgelängter Abschnitt eines Endlosprofiles. Als Material kommt Gummi oder ein elastomerer Kunststoff in Frage. Besonders zweckmäßig ist HNBR, der formentechnisch einfach zu beherrschen und immun gegen Kältemittel ist. Der Dichtring R kann eine Shore-Härte um etwa 70 haben. Die Zwischenabstände 21 sind in etwa gleich groß und betragen z.B. ca. 150% der radialen Stärke des Grundkörpers 23. Die axiale Dicke jeder Dichtlippe L1 bis L3 entspricht in etwa der radialen Dicke des Grundkörpers 23. Die Höhe jeder Dichtlippe L1 beträgt ca. 150% der radialen Dicke des Grundkörpers 23.

In Fig. 2B ist der Endteil 18' ein eigener Formteil T, der form- und kraftschlüssig an dem Rohrabschnitt des Grundkörpers 10 angebracht ist. Zu diesem Zweck ist am umlaufenden Formteil T wenigstens ein Raststeg 27 angeformt, der mit einem Raststeg 25 und einer entsprechenden Nut im Grundkörper 10 in einen Formschluß gebracht ist.

In Fig. 3 ist der Endteil 18' ebenfalls ein eigener Formteil T. Hier sind mehrere Rastelemente (Raststege 25, 26) an einer Fassung 26 des Formteils T und einem Endbereich 24 des Grundkörpers 10 vorgesehen.

Der Sitz 15 weist am unteren Ende eine Anlageschulter für den Dichtring R auf, der seine Lage ggfs. durch Reibschluß selbsttätig beibehält. Gestrichelt ist bei 28 angedeutet, daß an dem Formteil T auch eine obere Anlageschulter für den Dichtring R vorgesehen sein könnte. Alternativ ist es auch denkbar, eine entsprechende Anlageschulter 28 am Endbereich 24 des Grundkörpers 10 vorzusehen. Diese könnte das Aufschieben des Dichtringes R vor dem Montieren des Endteils 18' erleichtern.

Der Endteil 18' ist mit seinem Außendurchmesser größer ausgelegt als der Durchmesser des Sitzes 15.. Dies hat den Vorteil, im Endteil 18' möglichst große Querschnitte für die fensterartigen Durchbrüche 13 zu definieren, die durch das Filtermaterial 14 abgedeckt sind. Das Filtermaterial 14 wird beispielsweise in situ mit den Stegen 20 und dem durchgehenden Boden 19 angespritzt oder auch nachträglich festgelegt. Der Außendurchmesser des Endteils 18' sollte jedoch nicht größer sein als der Außendurchmesser der Dichtlippen L des Dichtringes R, um die Montage der Trocknerpatrone P durch Einstecken in den Sitz von oben zuzulassen.

In Fig. 3 ist eine Filterscheibe 13' angedeutet, die die Charge D vom Endteil 18' separiert. Diese Filterscheibe 13' könnte eine perforierte Kunststoffscheibe sein oder aus dem Filtermaterial 33 mit relativ großer Porengröße bestehen. Der Grundkörper 10 könnte in die Fassung 26 eingeklebt werden. Dann wären die Rastelemente 25 und 27 entbehrlich. Auch eine Schraub- oder Bajonettverschlußverbindung wäre denkbar. Die getrennte Bauweise gemäß Fig. 3 vereinfacht die Montage des Dichtringes R, und bietet den Vorteil, den Endteil 18 mit dem Filtermaterial 14 getrennt herzustellen und mit unterschiedlich langen Grundkörpem 10 wahlweise zu kombinieren.

Die Dichtlippen L, L1 bis L3 des Dichtrings werden in der Betriebslage mehr oder weniger verformt, um die notwendige Abdichtung zu erzeugen. Dabei ist es denkbar, alle vorgesehenen Dichtlippen zu verformen, oder nur mindestens eine davon, abhängig von den Einbaugegebenheiten.

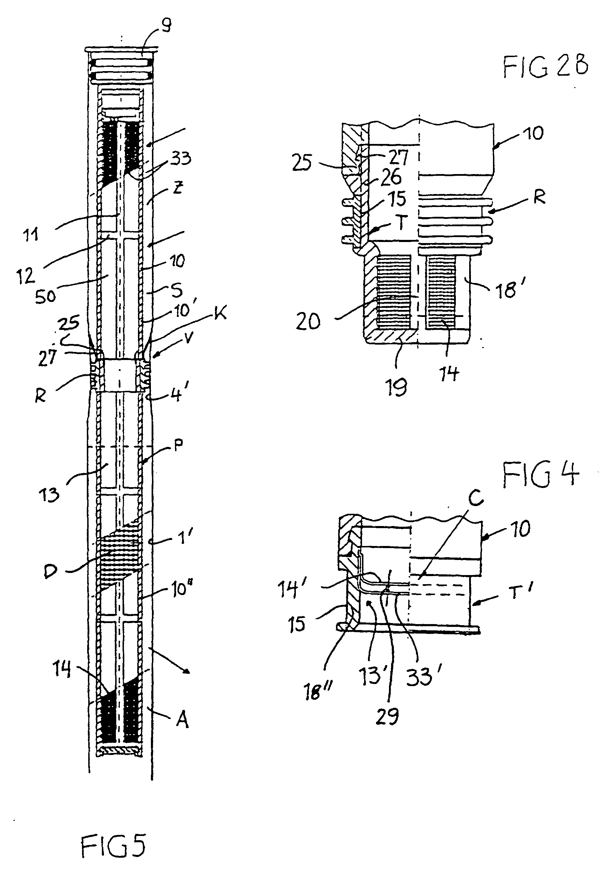

In Fig. 4 ist im einen eigenen Formteil T' bildenden Endteil 18'', der mit einem inneren Kanal als Abströmöffnung 13' geformt ist, eine Sicherheitsvorrichtung C vorgesehen. Zum Zurückhalten kleiner Partikel ist Filtermaterial 14' eingesetzt (als Scheibe, Kissen oder Napf). An der Stromabseite des Filtermaterials 14' ist ein durchlässiges Fang- oder Stützelement 33' angeordnet, vorzugsweise mit einem Zwischenabstand 29, das eine größere Porengröße (>500µm) hat als die Porengröße (>160µm) des Filtermaterials 14'. Das Element 33' kann eine Scheibe oder ein Napf sein und schützt das Filtermaterial gegen zu starkes Ausbeulen bzw. Brechen und gewährleistet sogar bei einem Bruch des Filtermaterials 14' eine Filter- bzw. Rückhaltewirkung für die Charge D.

In Fig. 5 ist der sogar vier Dichtlippen aufweisende Dichtring R in etwa in der Längsmitte an der Trocknerpatrone P angebracht. Diese sitzt in einem Strömungskanal S (im Kondensator, Trockner- oder Akkumulatorbehälter), dessen Innenwand 1' zur Bildung des Sitzes V für den Dichtring R eine in Axialrichtung begrenzte Einschnürung 4' aufweist. Die Dichtlippen L (wenigstens eine) arbeiten mit der Einschnürung 4' zusammen. Der Grundkörper 10 der Trocknerpatrone P besteht aus mindestens zwei bei 25, 26 nahe des Dichtringes R miteinander verrasteten Teilen 10', 10''. Oberhalb des Dichtringes R kann ein Kragen K zum Auffangen und Sammeln von im Bereich der Durchbrüche 50 zurückgehaltenen und herabgesunkenen Partikeln vorgesehen sein, der mit der Innenwand 1', 4' als Sammelkammer zuammenarbeitet und beim Herausheben der Trocknerpatrone P die Verunreinigungen austragen läßt.

## Patentansprüche

1. Trocknerpatrone (P) für eine Fahrzeug-Klimaanlage, mit einem Kunststoff-Grundkörper (10) in Form eines Rohrabschnittes, der zumindest in der Außenwand fensterartige Durchbrüche aufweist, die mit einem wenigstens eine Exsiccator-Charge (D) einschließenden Filtermaterial (33, 14) abgedeckt sind, mit wenigstens einer Abströmöffnung (13, 13') im unteren Endbereich des Rohrabschnitts, die durch ein Filtermaterial (14) abgedeckt ist, mit einem außen angeordneten, umlaufenden Sitz (15) zwischen den Durchbrüchen und der Abströmöffung, und mit einem im Sitz (15) angeordneten Dichtungsring (R) aus elastischem Material, **dadurch gekennzeichnet, daß** der Dichtungsring (R) einen in etwa zylindrischen Grundkörper (23) mit mindestens zwei axial beabstandeten, annähernd zueinander parallel umlaufenden und vom Grundkörper (23) nach außen abstehenden, frei endenden, biegsamen Dichtlippen (L, L1 bis L3) aufweist.

2. Trocknerpatrone nach Anspruch 1, **dadurch gekennzeichnet, daß** der Dichtungsring (R) drei Dichtlippen (L1 bis L3) aufweist.

3. Trocknerpatrone nach Anspruch 1, **dadurch gekennzeichnet, daß** der Grundkörper (23) axial über die jeweils endseitige Dichtlippe (L1, L3) übersteht und in etwa bündig mit dem als Ringnut ausgebildeten Sitz (15) abschließt.

4. Trocknerpatrone nach Anspruch 1, **dadurch gekennzeichnet, daß** die Dichtlippen (L, L1 bis L3) in etwa gleiche Höhe aufweisen, die, vorzugsweise ca. 150 % der radialen Dicke des Grundkörpers (23) beträgt.

5. Trocknerpatrone nach Anspruch 1, **dadurch gekennzeichnet, daß** zwischen den Dichtlippen (L, L1 bis L3) in etwa gleiche axiale Abstände vorgesehen sind, vorzugsweise in etwa jeweils 150% der radialen Dicke des Grundkörpers (23) entsprechend.

6. Trocknerpatrone nach Anspruch 1, **dadurch gekennzeichnet, daß** die axiale Stärke jeder Dichtlippe (L, L1 bis L3) in etwa der radialen Dicke des Grundkörpers (23) entspricht.

7. Trocknerpatrone nach Anspruch 1, **dadurch gekennzeichnet, daß** der Kamm jeder Dichtlippe (L, L1 bis L3) gerundet oder schneidenförmig ist.

8. Trocknerpatrone nach wenigstens einem der Ansprüche 1 bis 7, **dadurch gekennzeichnet, daß** der Dichtungsring (R) einstückig aus Gummi oder einem elastomeren Kunststoff, vorzugsweise aus HNBR, z.B. mit einer Shore-Härte um etwa 70, ausgebildet ist.

9. Trocknerpatrone nach Anspruch 1, **dadurch gekennzeichnet, daß** der Rohrabschnitt jenseits des Sitzes (15) für den Dichtungsring (R) einen topfartigen Endteil (18, 18', 18'') entweder mit umfangsseitigen, die Abströmöffnung (13) definierenden, durch das Feinfiltermaterial (14) abgedeckten Fenstern und einen geschlossenen Topfboden (19), oder mit einem inneliegenden Kanal als Abströmöffnung (13') aufweist.

10. Trocknerpatrone nach Anspruch 8, **dadurch gekennzeichnet, daß** der Endteil (18', 18'') mit der Abströmöffnung (13, 13') und dem Sitz (15) einen eigenständigen auf oder in den Rohrabschnitt gesteckten und mit diesem form- und/oder kraftschlüssig verbundenen Formteil (T, T') bildet.

11. Trocknerpatrone nach Anspruch 10, **dadurch gekennzeichnet, daß** der Formteil (T, T') wenigstens ein Rastelement (27), z.B. einen umlaufenden Steg, und der Rohrabschnitt (10) wenigstens ein Gegenrastelement (25), z.B. einen umlaufenden Wulst oder eine Nut, aufweisen, die in gegenseitigem Eingriff stehen.

12. Trocknerpatrone nach Anspruch 9, **dadurch gekennzeichnet, daß** der Dichtungsring (R) in etwa in der Längsmitte der Trocknerpatrone (P) auf dieser angeordnet ist.

13. Trocknerpatrone nach Anspruch 12, **dadurch gekennzeichnet, daß** der Sitz (V) durch einen verjüngten bzw. eingeschnürten Wandbereich (4') zwischen der Zuström- und der Abströmseite (Z, A) einer rohrartigen Innenwand (1') gebildet ist, mit dem mehr als eine der Dichtlippen (L) in Dichteingriff steht.

14. Trocknerpatrone nach wenigstens einem der vorhergehenden Ansprüche, **dadurch gekennzeichnet, daß** oberhalb des Dichtungsringes (R) ein Fang- und Sammelkragen (K) an der Trocknerpatrone (P) angeordnet ist.

15. Trocknerpatrone nach Anspruch 9, **dadurch gekennzeichnet, daß** in dem die Abströmöffnung (13') bildenden, durch das Filtermaterial (14') abgedeckten Kanal an der Stromabseite des Filtermaterials (14') ein Sicherheitselement (33') mit größerer Porengröße als der Porengröße des Filtermaterials (14') festgelegt ist.

16. Trocknerpatrone nach Anspruch 15, **dadurch gekennzeichnet, daß** das Sicherheitselement (33') mit einem Zwischenabstand (29) in Strömungsrichtung stromab des Filtermaterials (14') festgelegt ist.

## Claims

1. Dryer cartridge (P) for a vehicle air-conditioning system, with a plastic basic body (10) in the form of a tubular portion, which, at least in the outer wall, has window-like perforations which are covered with a filter material (33, 14) enclosing at least one desiccator charge (D), with at least one outflow orifice (13, 13') in the lower end region of the tubular portion, the said outflow orifice being covered by a filter material (14), with an externally arranged peripheral seat (15) between the perforations and the outflow orifice, and with a sealing ring (R) arranged in the seat (15) and consisting of elastic material, **characterized in that** the sealing ring (R) has an approximately cylindrical basic body (23) with at least two axially spaced-apart, freely ending, flexible sealing lips (L, L1 to L3) which run around approximately parallel to one another and project outwards from the basic body (23).

2. Dryer cartridge according to Claim 1, **characterized in that** the sealing ring (R) has three sealing lips (L1 to L3).

3. Dryer cartridge according to Claim 1, **characterized in that** the basic body (23) projects axially beyond the in each case end-face sealing lip (L1, L3) and is approximately flush with the seat (15) designed as an annular groove.

4. Dryer cartridge according to Claim 1, **characterized in that** the sealing lips (L, L1 to L3) have approximately the same height, which preferably amounts to approximately 150% of the radial thickness of the basic body (23).

5. Dryer cartridge according to Claim 1, **characterized in that** approximately equal axial clearances, preferably corresponding approximately in each case to 150% of the radial thickness of the basic body (23), are provided between the sealing lips (L, L1 to L3).

6. Dryer cartridge according to Claim 1, **characterized in that** the axial thickness of each sealing lip (L, L1 to L3) corresponds approximately to the radial thickness of the basic body (23).

7. Dryer cartridge according to Claim 1, **characterized in that** the ridge of each sealing lip (L, L1 to L3) is rounded or knife-shaped.

8. Dryer cartridge according to at least one of Claims 1 to 7, **characterized in that** the sealing ring (R) is formed in one piece from rubber or from an elastomeric plastic, preferably from HNBR, for example with a shore hardness of about 70.

9. Dryer cartridge according to Claim 1, **characterized in that** the tubular portion has, on the far side of the seat (15) for the sealing ring (R), a pot-like end part (18, 18', 18") either with circumferential windows defining the outflow orifice (13) and covered by the fine filter material (14) and a closed pot bottom (19) or with an internal duct as an outflow orifice (13').

10. Dryer cartridge according to Claim 8, **characterized in that** the end part (18', 18") with the outflow orifice (13, 13') and with the seat (15) forms an independent moulding (T, T') placed onto or into the tubular portion and connected positively and/or non-positively to the latter.

11. Dryer cartridge according to Claim 10, **characterized in that** the moulding (T, T') has at least one latching element (27), for example a peripheral web, and the tubular portion (10) has at least one counterlatching element (25), for example a peripheral bead or a groove, the said latching element and the said counterlatching element being in mutual engagement.

12. Dryer cartridge according to Claim 9, **characterized in that** the sealing ring (R) is arranged on the dryer cartridge (P) approximately at the longitudinal centre of the latter.

13. Dryer cartridge according to Claim 12, **characterized in that** the seat (V) is formed by a narrowed or contracted wall region (4') between the inflow and the outflow side (Z, A) of a tube-like inner wall (1'), more than one of the sealing lips (L) being in sealing engagement with the said wall region.

14. Dryer cartridge according to at least one of the preceding claims, **characterized in that** a catching and collecting collar (K) is arranged on the dryer cartridge (P) above the sealing ring (R).

15. Dryer cartridge according to Claim 9, **characterized in that** a safety element (33') with a greater pore size than the pore size of the filter material (14') is secured, on the downstream side of the filter material (14'), in the duct forming the outflow orifice (13') and covered by the said filter material (14').

16. Dryer cartridge according to Claim 15, **characterized in that** the safety element (33') is secured with an intermediate clearance (29) downstream of the filter material (14') in the direction of flow.

## Revendications

1. Cartouche de séchage (P) pour une installation de climatisation de véhicule, comprenant un corps de base en matière synthétique (10) sous la forme d'une partie tubulaire, qui présente au moins dans la paroi extérieure des percements de type fenêtre, qui sont recouverts avec un matériau de filtre (33, 14) comprenant au moins une Exsiccator-Charge (D), au moins une ouverture d'évacuation (13, 13') recouverte par un matériau de filtre (14) dans la zone d'extrémité inférieure de la partie tubulaire, un siège (15) disposé à l'extérieur et périphérique entre les percements et l'ouverture d'évacuation, et une bague d'étanchéité (R) à base de matériau élastique disposée dans le siège (15), **caractérisée en ce que** la bague d'étanchéité (R) présente un corps de base (23) à peu près cylindrique avec au moins deux lèvres d'étanchéité (L, L1 à L3) périphériques et débordant du corps de base (23) vers l'extérieur, espacées axialement, approximativement parallèles entre elles, souples et se terminant de façon libre.

2. Cartouche de séchage selon la revendication 1, **caractérisée en ce que** la bague d'étanchéité (R) présente trois lèvres d'étanchéité (L1 à L3).

3. Cartouche de séchage selon la revendication 1, **caractérisée en ce que** le corps de base (23) déborde axialement de chaque lèvre d'étanchéité (L1, L3) côté extrémité et se termine à peu près au même niveau que le siège (15) conçu comme une rainure annulaire.

4. Cartouche de séchage selon la revendication 1, **caractérisée en ce que** les lèvres d'étanchéité (L, L1 à L3) présentent à peu près la même hauteur qui est égale de préférence à environ 150 % de l'épaisseur radiale du corps de base (23).

5. Cartouche de séchage selon la revendication 1, **caractérisée en ce que** entre les lèvres d'étanchéité (L, L1 à L3) sont prévus des espacements axiaux à peu près égaux, correspondant de préférence à peu près à respectivement 150 % de l'épaisseur radiale du corps de base (23).

6. Cartouche de séchage selon la revendication 1, **caractérisée en ce que** l'épaisseur axiale de chaque lèvre d'étanchéité (L, L1 à L3) correspond à peu près à l'épaisseur radiale du corps de base (23).

7. Cartouche de séchage selon la revendication 1, **caractérisée en ce que** la crête de chaque lèvre d'étanchéité (L, L1 à L3) est arrondie ou en forme de lame.

8. Cartouche de séchage selon au moins l'une quelconque des revendications 1 à 7, **caractérisée en ce que** la bague d'étanchéité (R) est formée d'une seule pièce dans du caoutchouc ou un matériau synthétique élastomère, de préférence du HNBR, par exemple avec une dureté Shore d'environ 70.

9. Cartouche de séchage selon la revendication 1, **caractérisée en ce que** la partie tubulaire présente au-delà du siège (15) pour la bague d'étanchéité (R) une partie d'extrémité (18, 18', 18' ') en forme de pot soit avec des fenêtres côté périphérie, définissant l'ouverture de l'évacuation (13), recouvertes par le matériau de filtre fin (14) et un fond de pot (19) fermé, soit avec un canal intérieur comme ouverture d'évacuation (13').

10. Cartouche de séchage selon la revendication 9, **caractérisée en ce que** la partie d'extrémité (18', 18 ") forme avec l'ouverture d'évacuation (13, 13') et le siège (15) une partie moulée (T, T') indépendante, emboîtée sur ou dans la partie tubulaire et reliée à celle-ci par complémentarité de forme et/ou par adhérence des forces.

11. Cartouche de séchage selon la revendication 10, **caractérisée en ce que** la partie moulée (T, T') présente au moins un élément de verrouillage (27), par exemple une nervure périphérique, et la partie tubulaire (10) au moins un élément de contre-verrouillage (25), par exemple un bourrelet périphérique ou une rainure, qui se trouvent en engagement réciproque.

12. Cartouche de séchage selon la revendication 9, **caractérisée en ce que** la bague d'étanchéité (R) est disposée à peu près au centre longitudinal de la cartouche de séchage (P) sur celle-ci.

13. Cartouche de séchage selon la revendication 12, **caractérisée en ce que** le siège (V) est formé par une zone de paroi (4') rétrécie ou resserrée entre le côté arrivée et le côté sortie (Z, A) d'une paroi intérieure (1') de forme tubulaire, avec laquelle plus d'une des lèvres d'étanchéité (L) est en engagement d'étanchéité.

14. Cartouche de séchage selon au moins l'une quelconque des revendications précédentes, **caractérisée en ce qu'**une collerette réceptrice et collectrice (K) est disposée sur la cartouche de séchage (P) au-dessus de la bague d'étanchéité (R).

15. Cartouche de séchage selon la revendication 9, **caractérisée en ce qu'**un élément de sécurité (33') avec une taille de pore plus grande que la taille de pore du matériau de filtre (14') est fixé dans le canal formant l'ouverture d'évacuation (13') et recouvert par le matériau de filtre (14'), sur le côté aval du matériau de filtre (14').

16. Cartouche de séchage selon la revendication 15, **caractérisée en ce que** l'élément de sécurité (33') est fixé avec un espace intermédiaire (29) dans le sens d'écoulement en aval du matériau de filtre (14').
